# EUROPEAN PATENT APPLICATION

(11) **EP 1 862 205 A1**
(43) Date of publication of application: **05.12.2007**
(21) Application number: 06715535.8
(22) Date of filing: 10.03.2006
(51) Int. Cl.: B01D 29/09

(54) **SOLID AND LIQUID SEPARATOR AND SOLID AND LIQUID SEPARATING METHOD**

(30) Priority: 25.03.2005 JP 2005089602; 20.09.2005 JP 2005271722
(71) Applicant: Tsukishima Kikai Co., Ltd., Tokyo 104-0051 (JP)
(72) Inventor: SATO, Masuhiro, home, Chuo-ku, Tokyo, 1040051 (JP); HONMA, Tomoki, home, Chuo-ku, Tokyo, 1040051 (JP); TAKAGI, Hironobu, home, Chuo-ku, Tokyo, 1040051 (JP); CHIN, Takayoshi, home, Chuo-ku, Tokyo, 1040051 (JP); SAKURAI, Nobutaka, home, Chuo-ku, Tokyo, 1040051 (JP)
(74) Representative: Habasque, Etienne J. Jean-François
(86) International application number: PCT/JP2006/304765
(87) International publication number: WO 2006/103900

(57) **Abstract**

A solid and liquid separator (10) that separates a liquid substance and a solid substance from a mixed body (S). The device includes: a filtration section (11a) in which a front surface thereof is supplied to with the mixed body (S); a frame-shaped sealing implement (12a) having a frame-shaped pressing face (12d) that is pressed to the mixed body (S), and in which an entire perimeter of the pressing face (12d) is pressed and is able to make close contact with the front surface of the filtration section (11a) or the mixed body (S) supplied to the front surface; a sealing device (12) that supports the sealing implement (12a) so as to move back and forth with respect to the front surface of the filtration section (11a); and a pressurization device (13) that pressurizes the mixed body (S) supplied to the front surface of the filtration section (11a) at an inside of the pressing face.

## Description

### [Technical Field]

The present invention relates to a solid and liquid separator that separates a liquid substance and a solid substance from a mixed body, and a solid and liquid separating method.
Priority is claimed on Japanese Patent Application No. 2005-087602 filed March 25, 2005, and Japanese Patent Application No. 2005-271722 filed September 20, 2005, the contents of which are incorporated herein by reference.

### [Background Art]

As this type of solid and liquid separator, for example, as disclosed by Patent Document 1 mentioned below, a configuration that is furnished with a filtration section to which the mixed body is supplied to the front surface, a pressurization device which pressurizes the mixed body supplied to the front surface of the filtration section, and a collection device which collects the liquid substance on the back face side of the filtration section, is known. In regard to the pressurization device of Patent Document 1, a plurality of pierced holes are pierced, and there is provided a pressurizing plate that pressurizes by means of the front surface that is opened by these pierced holes making contact with the mixed body. By passing a pressurized fluid through the pierced holes in a state in which the pressurizing plate makes contact with the mixed body, the mixed body is pressurized by means of the pressurizing plate and the pressurized fluid.
In this manner, as a result of the mixed body being pressurized by both the pressurizing plate and the pressurized fluid, and the liquid substance that is squeezed out of the mixed body being collected by the collection device, the liquid substance and-the solid substance are separated from the mixed body.
[Patent Document 1] Japanese Patent Publication No. 3311417

### [Disclosure of Invention]

### [Problems to be Solved by the Invention]

In the conventional solid and liquid separator, at the time the mixed body is pressurized by the pressurizing plate, the mixed body is merely pressurized by means of the back surface (hereunder referred to as "pressurizing region") at which the pierced holes are opened and which makes contacts with and pressurizes the mixed body towards the front surface of the filtration section. Accordingly, at the time of pressurization, there is concern of the mixed body being pushed out or being dispersed to the outside from the pressurizing region along the front surface of the filtration section. In regard to the mixed body that is pushed out in this manner, since the remaining amount of liquid substance is greater than that which is positioned in the pressurizing region, a disparity in the purity of the obtained solid substance occurs, and as a result, there is a problem in that it is difficult to improve the purity of the solid substance.

### [Means for Solving the Problem]

The present invention is accomplished under such a background, and has an object in providing a solid and liquid separator and a solid and liquid separating method in which it is possible to prevent the mixed body being pushed out or being dispersed to the outside from the pressurizing region along the front surface of the filtration section at the time of pressurization, the disparity in the purity of the obtained solid substance is controlled, and the purity of this solid substance can be improved.

In order to solve such problems and to achieve the objects, the solid and liquid separator of the present invention includes: a filtration section in which a front surface thereof is supplied with the mixed body; a frame-shaped sealing implement having a frame-shaped pressing face that is pressed to the mixed body, and in which an entire perimeter of the pressing face is pressed and is able to make close contact with the front surface of the filtration section or the mixed body supplied to the front surface; a sealing device that supports the sealing implement so as to move back and forth with respect to the front surface of the filtration section; and a pressurization device that pressurizes the mixed body supplied to the front surface of the filtration section at an inside of the pressing face.

According to the present invention, in regard to the sealing implement, since the pressing face is supported so as to be pressed and make close contact with the front surface of the filtration section or the mixed body supplied to the front surface over the entire perimeter, and since the pressurization device separates the liquid substance by pressurizing the mixed body positioned on the inside of the pressing face of the sealing implement which is in close contact with the front surface of the filtration section or the mixed body supplied to the front surface; therefore, at the time of pressurization of the mixed body by means of the pressurization device, it is possible to prevent the mixed body from being pushed out or being dispersed to the outside from the inside of the opening face of the sealing implement along the front surface of the filtration section. That is to say, it is possible to pressurize the mixed body positioned on the inside of the pressing face of the sealing implement in a state in which the mixed body is held on the inside. Consequently, not only is it possible to achieve an improvement in the solid-liquid separation efficiency, but also the disparity of the purity of the obtained solid substance can be restrained, and the purity of this solid substance can be improved.

In regard to the solid and liquid separator of the present invention, by respectively independently providing a driving device that drives the sealing implement and a driving device that drives the pressurization device, the sealing implement and the pressurization device can respectively independently be driven. In this case, the load of the pressurization resulting from the sealing implement is, for example, able to be appropriately changed according to the properties of the mixed body. Accordingly, at the time of pressurization of the mixed body by means of the pressurization device, it is possible to prevent this mixed body from being pushed out or being dispersed to the outside irrespective of the type of mixed body. As a result, at the time a variety of types of mixed bodies are compressed or air filtered, it is possible to perform a stable filtration without the mixed body being dispersed, and as well as being able to achieve an improvement in the solid-liquid separation efficiency, it is possible to achieve an improvement in the handleability of this solid and liquid separator.

It is desirable for the sealing implement to be formed by an elastically deformable material. As such a material, for example, one of rubber foam, a closed cell sponge, and urethane, can be used.
In this case, it is possible to pressurize the mixed body positioned on the inside of the opening face of the sealing implement in a state in which the sealing implement is elastically deformed and is in close contact with the front surface of the filtration section or the mixed body supplied to the front surface, and at the time of pressurization, it is possible to reliably restrain the pushing out and the like of the mixed body to the outside from the inside of the opening face of the sealing implement, and it is possible to reliably achieve an improvement in the solid-liquid separation efficiency, and a reduction in the disparity of the purity of the solid substance.

As another example of the elastically deformable sealing implement, a tube can be used. By supplying the pressurized fluid within the tube, the tube is also possible to be expanded and elastically deformed.
In this case, it is possible to demonstrate the same operation effects as the sealing implement formed by the aforementioned materials. Furthermore, since the tube is expanded, elastically deformed, and makes close contact with the front surface of the filtration section by supplying the first pressurized fluid directly within the tube, it is possible to reliably achieve the seal of the mixed body resulting from the sealing implement, by a simple configuration.

In regard to the sealing device, the sealing implement may be mutually independently pressable with respect to the front surface of the filtration section or the mixed body supplied to the front surface at multiply divided regions in the circumferential direction of the sealing implement.
In this case, it is possible to make the close contact force towards the front surface of the filtration section or the like different for each circumferential position of the sealing implement. Accordingly, for example, according to the properties of the mixed body or the restrictions on the devices, by adjusting this close contact force at each circumferential direction position of the sealing implement, it is possible to make the close contact state towards the front surface of the filtration section or the like, even over the entire perimeter of the sealing implement. Consequently, it is possible to reliably restrain the pushing out and the like of the mixed body to the outside from the inside of the pressing face of the sealing implement.

The pressurization device may pressurize the mixed body by a second pressurized fluid supplied to the inside of the pressing face of the sealing implement.
The pressurization device may be further provided with: a pressurizing plate that is pierced with a plurality of pierced holes, and a surface in which these pierced holes are opened makes contact with, and pressurizes the mixed body; and the mixed body may be pressurized by the pressurizing plate and the second pressurized fluid, by passing the second pressurized fluid through the pierced holes while the pressurizing plate is in contact with the mixed body,. In this case, it is possible to reliably achieve an improvement in the solid-liquid separation efficiency, and a reduction in the disparity of the purity of the solid substance.

A collection device, that is connected to a vacuum suction device, and that collects the liquid substance, may be provided on the back face of the filtration section.
In this case, the mixed body supplied to the front surface of the filtration section is pressurized not only from the upper by means of the pressurization device, but it is also possible for vacuum suction to be performed from the lower side by means of the vacuum suction device. Accordingly, it is possible to further improve the solid-liquid separation efficiency and the purity of the obtained solid substance.
It is preferable for the pressure of the vacuum suction to be, for example, -0.01 to
- 0.1 MPa.

The front surface of the filtration section may include a filter cloth that travels substantially horizontally; and the collection device may include a vacuum tray that is connected to the vacuum suction device, and preferably a plurality of the correction devices are provided beneath the filter cloth in the traveling direction of the filter cloth.
In this case, it is possible to perform solid-liquid separation by pressurizing the mixed body while being moved intermittently or continuously by means of the filter cloth. Accordingly, solid-liquid separation processing can be executed with a high efficiency, and the purity of the obtained solid substance can be improved.

The solid and liquid separating method of the present invention is characterized by: surrounding a mixed body containing a liquid substance and a solid substance, that is supplied to a front surface of a filtration section with a frame-shaped sealing implement to seal a pressurizing region; and pressurizing the mixed body positioned within the pressurizing region, to separate the liquid substance and the solid substance.

The solid and liquid separating method of the present invention is characterized by: surrounding a mixed body containing a liquid substance and a solid substance, that is supplied to a front surface of a filtration section with a frame-shaped sealing implement to seal a pressurizing region; and when pressurizing the mixed body positioned within the pressurizing region to separate the liquid substance from the solid substance, vacuum suctioning on the mixed body supplied to the front surface of the filtration section from a back face side of the filtration section.
In these cases, not only is it possible to achieve an improvement in the solid-liquid separation efficiency, but also the disparity of the purity of the obtained solid substance can be restrained, and the purity of this solid substance can be improved.

### [Effects of the Invention]

According to the present invention, not only is it possible to achieve an improvement in the solid-liquid separation efficiency, but also disparities in the purity of the obtained solid substance are restrained, and the purity of this solid substance can be improved.

### [Brief Description of the Drawings]

FIG. 1 is a schematic view showing a main section of a solid and liquid separator disclosed as a first embodiment of the present invention.
FIG. 2 is a cross-sectional plan view showing the solid and liquid separator of FIG. 1 viewed from a traveling direction of a filter cloth.
FIG. 3 is a cross-sectional plan view showing the solid and liquid separator of FIG. 1 viewed from a direction orthogonal to the traveling direction of the filter cloth.
FIG. 4 is an overall schematic view showing a solid and liquid separator disclosed as one embodiment of the present invention.
FIG. 5 is a main section schematic view showing a solid and liquid separator disclosed as a second embodiment of the present invention.
FIG. 6 is a schematic view showing a main section of a solid and liquid separator disclosed as a third embodiment of the present invention.

### [Brief Description of the Reference Symbols]

- 10: solid and liquid separator
- 10a: device main body
- 11: filter cloth
- 11a: filtration section
- 12, 30, 40: sealing device
- 12a, 31: sealing implement
- 12d: pressing face
- 13: pressurization device
- 14: collection device
- A 1 to A4: vacuum tray
- F: traveling direction of filter cloth
- S: slurry (mixed body)
- V: vacuum suction device

### [Best Mode for Carrying Out the Invention]

### <First Embodiment>

Hereunder, a first embodiment of the present invention is explained based on FIG. 1 to FIG 4.
A solid and liquid separator 10 of the present invention is furnished with; a filtration section 11 a to which a mixed body is supplied to a front surface, a sealing device 12 that has a frame-shaped sealing implement 12a, a pressurization device 13 that pressurizes the mixed body supplied to the front surface of the filtration section 11a, and a collection device 14 provided on a back face side of the filtration section 11a that collects a liquid substance that is separated from the mixed body.

In the present embodiment, the filtration section 11a is configured by a portion of a filter-cloth 11 provided to a device main body 10a so as to travel substantially horizontally. As shown in FIG. 4, the filter cloth 11 is provided so as to be stretched in an endless form on a plurality of guide rolls 15 which are provided on the device main body 10a rotatably freely. Of the filter cloth 11, a horizontal portion which is horizontally stretched on the upper side of the device main body 10a configures the filtration section 11a.
In regard to the collection device 14, a plurality (four in the example shown in the drawing) are provided on the back face side of the filtration section 11a along a traveling direction F of the filtration section 11a. The collection devices 14 are configured by box shaped vacuum trays A1 to A4 which are connected to a vacuum suction device V. The mixed body is a so-called slurry S which contains a solid substance within a liquid substance.

As shown in FIG. 1 and FIG 2, the upper faces of the plurality of vacuum trays A 1 to A4 are a substantial U-shape, in which a horizontal section 14b which is the central section of the cross-section thereof when viewed from the traveling direction F of the filtration section 11a, and inclined sections 14c which respectively rise diagonally upwardly and outwardly from both end sections of the horizontal section 14b, are connected. The filtration section 11a which is positioned on the upper faces of the vacuum trays A1 to A4 is also a substantial U-shape such that it follows along the upper faces of the vacuum trays A1 to A4.
A plurality of pierced holes are formed in the horizontal section 14b and in the inclined sections 14c on the horizontal section 14b side of the upper faces of the vacuum trays A1 to A4. A vacuum suction force acts on the slurry S supplied to the front surface of the filtration section 11 a via the pierced holes, and the liquid substance from the slurry S flows into the interior of the vacuum trays A1 to A4. It is preferable for the pressure of vacuum suction to be made, for example, -0.01 to -0.1 MPa.

The plurality of vacuum trays A1 to A4 is respectively independently connected to control valves and filtrate vessels not shown in the drawing. The filtrate vessels are connected to a vacuum pump and a filtrate pump not shown in the drawing. The vacuum trays A1 to A4 independently perform a necessary vacuumizing and opening to an atmosphere. The filter cloths 11 on the vacuum trays A1 to A4, that is, the filtration sections 11a, are respectively divided into a cake-shaping section, a first and a second washing section, and a dewatering section.

On the upper side of the filtration sections 11 a, a slurry supply device 16 and a first and a second washing device 17a and 17b which are supported by a movement frame 10b are provided so as to move back and force along the traveling direction F of the filtration section 11a in a state in which they are mutually connected. The slurry supply device 16 supplies the slurry S to the cake-shaping section. The washing devices 17a and 17b respectively supply a secondary washing filtrate (a collected liquid collected by being passed through the second washing section) and a fresh washing liquid (for example, tap water) to the first and the second washing sections.

As shown in FIG 4, a supporting member 19 is installed on a lower section of the device main body 10a. A traveling cart 18 is positioned on the supporting member 19 so as to travel along the traveling direction F of the filtration section 11a. To the traveling cart 18, a nipping cylinder (not shown in the drawing) that nips and holds the filter cloth 11 which is positioned on the lower part of the vacuum trays A1 to A4, in the thickness direction of the filter cloth 11, is provided.
On the lower section of the device main body 10a, a movement cylinder 20 is hangingly provided such that the axis extends in the traveling direction F. One end section (the trailing end section of the traveling direction F) 20a of the movement cylinder 20 is connected to the traveling cart 18.

As explained above, the one end section 20a of the movement cylinder 20 moves towards the opposite direction to the traveling direction F in a state in which the nipping cylinder nips the filter cloth 11 which is positioned on the lower part of the vacuum trays A1 to A4. As a result, the traveling cart 18 accompanies the filter cloth 11 which is positioned on the lower part of the vacuum trays A1 to A4, and travels towards the opposite side to the traveling direction F, and the filtration section 11a travels (that is to say, moves forward) towards the traveling direction F.
A washing pipe 21 is connected to an other end section (the leading end section of the traveling direction F) 20b of the movement cylinder 20. On the end of the washing pipe 21 (the leading end section in the traveling direction F), a washing nozzle 22 which washes the filter cloth 11 following stripping of the obtained solid substance, is provided such that it is surrounded by a cover 23 for preventing dispersion of the washing water.

In regard to the solid and liquid separator 10 of the present embodiment, on the upper side of the filtration section 11 a, the pressurization device 13 and the sealing device 12 are arranged farther in the forward of the traveling direction F than the second washing liquid supply device 17b (in the example shown in the drawing, the arrangement position of the vacuum tray A4, which is positioned at the leading end with respect to the traveling direction F). The pressurization device 13 and the sealing device 12 are positioned at the same position in the traveling direction F as the filtration section 11 a, and they operate at the same time with respect to the same slurry S on the front surface of the filtration section 11 a.

The pressurization device 13 is, as shown in FIG. 1 to FIG 3, furnished with a plan view rectangular shaped main body section 13a, a planar venting plate (pressurizing plate) 13b, which is arranged on the lower face side of the main body section 13a that opposes the front surface of the filtration section 11 a, a driving section 13c of the pressurization device that supports the main body section 13a and the venting plate 13b such that they are able to be moved back and forth with respect to the front surface of the filtration section 11a, and a pressurized fluid supply device (not shown in the drawing) that supplies a second pressurized fluid to the main body section 13a.

Opening sections 13e and 13f that open with respect to the front surface of the filtration section 11a are provided on the lower face of the main body section 13a, as shown in FIG 2. In the present embodiment, the plurality of opening sections 13e and 13f are provided. The opening section 13e is a primary opening section 13e that opens at the width direction central section with respect to the front surface of the filtration section 11a. The opening sections 13f are secondary opening sections 13f that open at both width direction end sections with respect to the front surface of the filtration section 11a. The interior of these opening sections 13e and 13f are communicated with the pressurized fluid supply device via second pressurized fluid supply holes 13h, and is able to be supplied with the second pressurized fluid. In the present embodiment, air is employed as the pressurized fluid.

The driving section 13c of the pressurization device is connected to the upper face of the main body section 13a. By driving the driving section 13c, the main body section 13a moves with the venting plate 13b such that it is moved back and forth with respect to the front surface of the filtration section 11 a.

The venting plate 13b is installed on the lower face of the main body section 13a such that it blocks the opening sections 13e and 13f. In this venting plate 13b, a plurality of pierced holes 13g which pass through in the thickness direction, are pierced. The second pressurized fluid which is supplied to the opening sections 13e and 13f via the pressurized fluid supply holes 13h, passes through the pierced holes 13g, and makes contact with the slurry S supplied to the front surface of the filtration section 11a, and hence the slurry S is pressurized.
It is preferable for the pressure of the second pressurized fluid that pressurizes the mixed body to be made, for example, 0.1 to 1.0 MPa.

The sealing device 12 is, as shown in FIG. 1 to FIG. 3, furnished with the frame-shaped sealing implement 12a, a backup plate 12b that is bonded to the upper face of the sealing implement 12a, and a sealing implement driving device 12c, such as a cylinder device, that is connected to the upper face of the backup plate 12b and supports the backup plate 12b with the sealing implement 12a movably back and forth with respect to the front surface of the filtration section 11a. The sealing device 12 presses a pressing face 12d of the sealing implement 12a so as to make close contact over the entire perimeter thereof to the front surface of the filtration section 11a at portions that correspond to the inclined sections 14c of the vacuum tray A4, and to the slurry S that is supplied to the front surface. The sealing implement driving device 12c is configured by a separate configuration element that differs to the pressurization device driving section 13c. Therefore the sealing implement driving device 12c moves the sealing implement 12a back and forth independently of the venting plate 13b, and presses the front surface of the filtration section 11a at portions that correspond to the inclined sections 14c of the vacuum tray A4, and the slurry S that is supplied to the front surface.
It is preferable for the pressing force of the sealing implement 12a to be, for example, 0.1 to 1.0 MPa.

The sealing device 12 is furnished at the peripheral edge section of the main body section 13a of the pressurization device 13. The sealing implement 12a is arranged such that the lower face side thereof protrudes from the lower face of the main body section 13a. The backup plate 12b is arranged on the inner side of the main body section 13a. The sealing implement driving device 12c is arranged on the upper face of the main body section 13a.
The backup plate 12b is, as shown in FIG 1, as well as being arranged such that it covers substantially the whole area of the upper face of the sealing implement 12a, multiply divided in the circumferential direction thereof. That is to say, the backup plate 12b takes a configuration in which, amongst the sealing implement 12a, it is divided into a portion that corresponds to the inclined sections 14c of the vacuum tray A4, and a section that presses the slurry S that is supplied to the front surface.

The sealing implement driving devices 12c are furnished corresponding to the multiply divided backup plates 12b, and are able to mutually independently move the divided backup plates 12b back and forth separately with respect to the front surface of the filtration section 11 a by means of the plurality of sealing implement driving devices 12c.
Consequently, the close contact force of the integrally formed sealing implement 12a becomes different at the portions that press the front surface of the filtration section 11 a, at portions that correspond to the inclined sections 14c of the vacuum tray A4, and the portion that presses the slurry S that is supplied to the front surface. Accordingly, the close contact state of the sealing implement 12a is made uniform over the entire perimeter. The sealing implement 12a of the present embodiment is formed by, for example, rubber foam, a closed cell sponge, or urethane, and is deformed elastically at the time it makes close contact with the front surface of the filtration section 11a which are positioned at portions that correspond to the inclined sections 14c of the vacuum tray A4, and the slurry S that is supplied to the front surface.

In regard to the plan view of the sealing device 12 and the pressurization device 13, the inner perimeter edge shape of the sealing implement 12a is substantially the same shape as the outer peripheral edge shape of the venting plate 13b of the pressurization device 13, and it is a state where there is substantially no space between the inner peripheral edge of the sealing implement 12a and the outer peripheral edge of the venting plate 13b. That is to say, the venting plate 13b and the sealing implement 12a of the present embodiment are arranged so that a portion of the outer peripheral edge of the venting plate 13b bites into the inner peripheral edge of the sealing implement 12a.

At the time the sealing implement 12a is moved forward, as shown in FIG. 2, of the lower face thereof, the outer peripheral edge side in the width direction of the filtration section 11a makes close contact with the upper faces of the inclined sections 14c of the vacuum tray A4 via the filter cloth 11, and the inner peripheral edge side in the width direction of the filtration section 11a makes close contact with the peripheral edge section in the width direction of the slurry S. Of the lower face of the sealing implement 12a, both end sections in the traveling direction F make close contact with the slurry S, as shown in FIG. 3.

Next, a method for separating from the slurry S into a liquid substance and a solid substance by means of the solid and liquid separator 10 that is configured as mentioned above is explained.
Firstly, after vacuum suction with respect to the vacuum trays A 1 to A4 is stopped, the one end section 20a of the movement cylinder 20 is moved by a predetermined distance towards the opposite direction to the traveling direction F, in a state in which the filter cloth 11, which is positioned on the lower part of the vacuum trays A1 to A4, is held by means of the nipping cylinder. Consequently, the filter cloth 11, which is positioned on the lower part of the vacuum trays A1 to A4, is moved towards the opposite side in the traveling direction F, and the filtration section 11 a is moved by a predetermined distance towards the traveling direction F.

Next, vacuum suction of the vacuum trays A1 to A4 is started. At this time, the slurry S is uniformly supplied to the cake-shaping section on the upper face of the vacuum tray A1 by means of the slurry supply device 16. By means of the first and the second washing devices 17a and 17b, the secondary washing filtrate and fresh washing liquid are evenly dispersed in the first and the second washing sections of the upper face of the vacuum trays A2 and A3 respectively, and washing of the cake form slurry S, which is formed on the first and the second washing sections, is performed. Washing water is supplied to the filter cloth 11 by means of the washing nozzle 22, and washing of the filter cloth 11 is performed. In the dewatering section, dewatering and drying are performed as a result of performing vacuum suction of the washed slurry S.

As a result of the above, after making a cake form slurry S by moving the filtration section 11 a intermittently by a predetermined distance in the traveling direction F each time by means of the nipping cylinder and the movement cylinder 20 and by supplying the slurry S to the front surface of the filtration section 11 a by means of the slurry supply device 16 and performing vacuum suction on the slurry S, the slurry S is washed by supplying the secondary washing filtrate and the washing liquid by means of the first and the second washing devices 17a and 17b and performing vacuum suction. Furthermore, the slurry S is dewatered and dried by means of vacuum suction, and is stripped and collected as a solid substance by means of a scraper (not shown in the drawing).

Here, in the present embodiment, in regard to the vacuum tray A4 which is positioned in the fore end section in the traveling direction F, at the time vacuum suction is performed on the slurry S which is supplied with the secondary washing filtrate and the washing liquid, the pressurization device driving section 13c of the pressurization device 13 is moved forward towards the front surface of the filtration section 11a in a state in which the filter cloth 11 is stopped, and thus the main body section 13c with the venting plate 13b is moved forward towards the front surface of the filtration section 11 a.

At the same time as this, the sealing implement driving device 12c of the sealing device 12 is driven forward towards the front surface of the filtration section 11a, the sealing implement 12a is moved forward towards the front surface of the filtration section 11a via the backup plate 12b, and the lower face (pressing face) 12d of the sealing implement 12a is pressed and made to make close contact to the front surface of the filtration section 11a at portions that correspond to the inclined sections 14c of the vacuum tray A4, and the slurry S supplied to the front surface. At this time, the sealing implement 12a is elastically deformed in the thickness direction thereof.
As a result of the above, at substantially the same time as the lower face of the sealing implement 12a being pressed and making close contact with the front surface of the filtration section 11 a and the slurry S supplied to the front surface, the lower face of the venting plate 13b makes contact with the slurry S which is sealed by being surrounded by the sealing implement 12a.

In a state in which the slurry S is surrounded by means of the sealing implement 12a, the pressurized fluid supply device is operated, and the second pressurized fluid is supplied to the opening sections 13e and 13f via the pressurized fluid supply holes 13h formed in the main body section 13a. Consequently, the interior of the opening sections 13e and 13f of the main body section 13a is blocked by the venting plate 13b and the slurry S, and the internal pressure thereof rises. The raised internal pressure and the pressurized fluid supplied to the opening sections 13e and 13f act on the slurry S via the pierced holes 13g pierced through the venting plate 13b.

As explained above, the slurry S positioned on the inside of the pressing face 12d of the sealing implement 12a is pressurized by the second pressurized fluid supplied into the opening sections 13e and 13f. At this time, by vacuum drawing the lower face side of the filtration section 11 a beforehand by means of the vacuum tray A4, this slurry S is separated into a solid substance and a liquid substance.

According to the solid and liquid separator 10 of the present embodiment as explained above, the sealing implement 12a is supported so that the pressing face 12d thereof is pressed and able to make close contact with the front surface of the filtration section 11a and the slurry S supplied to the front surface over the entire perimeter; and the pressurization device 13 separates the liquid substance by pressurizing the front surface or the slurry S positioned on the inside of the pressing face 12d of the sealing implement 12a in close contact with the front surface of the filtration section 11 a. Accordingly, at the time of pressurization of the slurry S by means of the pressurization device 13, it is possible to prevent this slurry S being pushed out, or being dispersed, farther to the outside along the front surface of the filtration section 11a than the inside of the opening face of the sealing implement 12a.

That is to say, it is possible to pressurize the slurry S positioned on the inside of the pressing face 12d of the sealing implement 12a in a state in which it is held on the inside. Consequently, not only is it possible to achieve improvements in the solid-liquid separation efficiency, but also the disparity in the purity of the obtained solid substance is restrained, and the purity of this solid substance can be improved.

Since the sealing implement 12a is formed by a member that undergoes elastic deformation, in a state in which the sealing implement 12a is in close contact with the front surface of the filtration section 11 a and the slurry S supplied to the front surface and while elastically deformed, the slurry S positioned on the inside of the opening face of the sealing implement 12a can be separated into a solid and a liquid. Accordingly, at the time of pressurization, it is possible to reliably prevent the pushing out and the like of this slurry S to the outside from the inside of the opening face of the sealing implement 12a. Consequently, improvements in the solid-liquid separation efficiency and the disparity of the purity of the solid substance can be further controlled.

The sealing implement 12a is supported by means of the sealing implement driving device 12c via the backup plate 12b so as to be able to move back and forth. Accordingly, even if the sealing implement 12a formed by the aforementioned materials have a high flexibility, it is possible to move this sealing implement 12a back and forth easily and reliably by means of the sealing implement driving device 12c.

The sealing implement 12a can be pressed mutually independently to a plurality of regions divided in the circumferential direction thereof with respect to the front surface of the filtration section 11a and the slurry S supplied to the front surface. Accordingly, for each circumferential position of the sealing implement 12a, that is to say, in the present embodiment, for the portion that presses the front surface of the filtration section 11a at portions that correspond to the inclined sections 14c of the vacuum tray A4, and the portion that presses the slurry S that is supplied to the front surface, it is possible to make the close contact force different. For example, it is possible to make the pressing force at the portion that presses the slurry S smaller than the pressing force at the portion that presses the front surface of the filtration section 11a. Consequently, since it is possible to make the close contact state uniform over the entire perimeter of the sealing implement 12a, it is possible to reliably prevent the pushing out and the like of the slurry S to the outside from inside the opening face of the sealing implement 12a.

In the solid and liquid separator 10 of the present invention, the front surface of the filtration section 11 a is configured by the filter cloth 11 provided so as to travel substantially horizontally on the device main body 10a; and the collection device 14 is configured by the plurality of vacuum trays A1 to A4 provided in the traveling direction F of the filtration section 11 a and beneath the filtration section 11 a and connected to the vacuum suction device V. As a result of such a configuration, the slurry S supplied to the front surface of the filtration section 11a is separated into the liquid substance and the solid substance by performing vacuum suction by means of the vacuum tray A4 via the filter cloth while being pressurized by the pressurization device 13. Therefore, it is possible to perform solid-liquid separation by pressurization while intermittently moving the slurry S by means of the filter cloth 11, and solid-liquid separation processing, in which the purity of the obtained solid substance is improved, can be executed with a high efficiency.

Since the sealing implement driving device 12c is configured by a separate configuration element that differs to the pressurization device driving section 13c, the sealing implement driving device 12c can press the front surface of the filtration section 11a at portions that correspond to the inclined sections 14c of the vacuum tray A4 and the slurry S supplied to the front surface, independently of the venting plate 13b. Accordingly, for example, according to the properties or the like of the slurry S supplied to the front surface of the filtration section 11 a, it is possible to appropriately change the pressing load towards the front surface of the filtration section 11a of the venting plate 13b and the sealing implement 12a. Consequently, at the time of pressurization of the slurry S by means of the pressurization device 13, it is possible to prevent this slurry S from being pushed out or being dispersed to the outside, irrespective of the type of slurry S. As a result, at the time a variety of types of slurries S are compressed or air filtered, it is possible to perform a stable filtration without the slurry S being dispersed, and as well being able to achieve an improvement in the solid-liquid separation efficiency, it is possible to achieve an improvement in the handleability of this solid and liquid separator 10.

### <Second Embodiment>

Next, a second embodiment according to the present invention is explained referring to FIG. 5. The same parts as the first embodiment are given the same reference symbols, and the explanations thereof are omitted, and only the points that differ are explained.
A sealing device 40 of the present embodiment includes a sealing implement driving device 41 provided with a tube instead of the sealing implement driving device 12c of the sealing device 12 including a cylinder device or the like.
When the first pressurized fluid is supplied into the sealing implement driving device 41 through pressurized fluid supply holes 42 formed on the main body section 13a of the pressurization device 13, the sealing implement driving device 41 elastically expanded. Since the sealing implement 12a moves forward towards the front surface side of the filtration section 11a as a result of the deformation of the sealing implement 12a, the front surface of the filtration section 11 a at portions that correspond to the inclined sections 14c of the vacuum tray A4 and the slurry S supplied to the front surface can be pressed.

In the present embodiment, the plurality of sealing implement driving devices 41 are furnished. The plurality of pressurized fluid supply holes 42 are formed on the main body section 13a according to the number of these sealing implement driving devices 41. The first pressurized fluid can mutually independently be supplied from the individual pressurized fluid supply holes 42 to the interior of the respective sealing implement driving devices 41. Consequently, in regard to the sealing implement 12a, it is possible to make the pressing force thereof different between the portion that presses the front surface of the filtration section 11a, and the portion that presses the slurry S that is supplied to the front surface of the filtration section 11 a.

In the present embodiment, it is also possible to demonstrate substantially the same operation effects as the first embodiment. In particular, compared to the sealing device 12 of the first embodiment, it is possible to reduce the number of configuration elements in the sealing device 40, and as well as being possible to achieve an improvement in the handleability, it is possible to restrain cost increases of the device.

### <Third Embodiment>

Next, a third embodiment according to the present invention is explained referring to FIG. 6, although only the points that differ from the first embodiment are explained.
A sealing device 30 of the present embodiment is provided with a sealing implement 31 formed by a tube, instead of the sealing implement 12a and the backup plate 12b of the first embodiment. Furthermore, a pressurized fluid supply hole 32 which connect the interior of the sealing implement 31 and a pressurized fluid supply device (not shown in the drawing), are arranged on the main body section 13a of the pressurization device 13. As a result of the first pressurized fluid being supplied to the interior of the sealing implement 31 through the pressurized fluid supply hole 32, the sealing implement 31 is expanded, and the lower face of the sealing implement 31 makes close contact with the front surface of the filtration section 11 a in a state in which it is elastically deformed.
In the present embodiment, not only is it possible to demonstrate the same operation effects as the first and the second embodiments, but also it is possible to achieve further reduction of configuration elements in regard to the sealing device 30.
In a case where a tube is used as the sealing implement 31, it is preferable for the internal pressure of the tube to be made, for example, 0.1 to 1.0 MPa.

The technical scope of the present invention is not restricted by the embodiments, and it is possible to apply a variety of changes within a scope which does not depart from the gist of the present invention. For example, in the aforementioned embodiments, although a configuration in which the filter cloth 11 is intermittently moved in the traveling direction F was disclosed, it is also applicable to a case where it is continuously moved. Furthermore, in the aforementioned embodiments, although a configuration employing a so-called horizontal vacuum filter, such as is shown in FIG. 4 as the solid and liquid separator 10 was disclosed, it is not restricted to this, and for example, it is also applicable in regard to a configuration in which the filtration section 11a is not supported such that it can travel, and the front surface of the filtration section 11a to which the mixed body is supplied is fixed. Furthermore, although a configuration was disclosed in which the vacuum trays A1 to A4 configure the collection device 14, it is in not restricted to this. Moreover, it may be a configuration that does not have the collection device 14, that is to say, solid-liquid separation is performed on the slurry S supplied to the front surface of the filtration section 11a without vacuum suction by the vacuum suction device V, and simply by pressurization by means of the pressurization device 13.

Furthermore, in the aforementioned embodiments, a configuration employing air as the pressurized fluid was disclosed, although, for example, liquids such as water or a washing liquid may be employed. Moreover, a solid and liquid separator 10 that does not have a venting plate 13b may be employed.
Furthermore, the venting plate 13b may be used as a pressurizing plate that pressurizes the slurry S supplied on the front surface of the filtration section 11a. That is to say, when the pressurization device driving section 13c is driven and moves forward with respect to the front surface of the filtration section 11a, the slurry S on the front surface of the filtration section 11a may be pressurized by the lower face of the venting plate 13b, furthermore the slurry S may be pressurized by the second pressurized fluid in a state in which the pressurization by this venting plate 13b is maintained. In this case, an improvement in the solid-liquid separation efficiency and the purity of the solid substance can be achieved with more reliability. Moreover, it is also possible to not perform pressurization by means of the second pressurized fluid, and to pressurize the slurry S by using a pressurizing plate in which pierced holes 13g are not pierced, instead of the venting plate 13b.
In a case where the slurry S is pressurized by the venting plate 13b as the pressurizing plate, it is preferable for the pressurization pressure of the venting plate 13b to be made, for example, 0.1 to 1.0 MPa.

As aspects for pressurizing the slurry S by means of the pressurization device 13, the three aspects are explained: an aspect using only the second pressurized fluid, an aspect using both the second pressurized fluid and the venting plate 13b as the pressurizing plate, and an aspect using only the pressurizing plate. In regard to these aspects, the slurry S provided on the front surface of the filtration section 11 a by means of the collection device 14 from the lower side thereof may be vacuum suctioned, and it is also acceptable if it is not suctioned.

Instead of the sealing device 30 shown in FIG. 6, a configuration in which the sealing implement 31 is multiply divided in the circumferential direction thereof may be employed. In other words, in regard to the sealing device 40 shown in FIG. 5, the sealing implement 12a may be removed, and the plurality of sealing implement driving devices 41 which are formed by tubes may be used as the sealing implement. Then, in this case, the first pressurized fluid is separately supplied to the interior of the plurality of sealing implements (sealing implement driving devices 41) via the pressurized fluid supply holes 42. Then when the sealing implements undergo expansion deformation, it is desirable for the lower faces thereof to make close contact with the front surface of the filtration section 11 a at portions that correspond to the inclined sections 14c of the vacuum tray A4, and with the slurry S supplied to the front surface, and for the circumferential end sections of the sealing implement driving devices 41 that are adjacent in the circumferential direction thereof to be made to make close contact with each other in a state in which they are elastically deformed.

Furthermore, in the first embodiment shown in FIG. 1 to FIG. 3, and in the second embodiment shown in FIG. 5, the sealing implement driving devices 12c and 41 which move the sealing implement 12a back and forth with respect to the front surface of the filtration section 11a were configured by separate configuration elements from the pressurization device driving section 13c which supports the main body section 13a and the venting plate 13b so as to move back and forth with respect to the front surface of the filtration section 11a. Alternatively to this, the sealing implement 12a may be moved back and forth with respect to the front surface of the filtration section 11 a by means of the pressurization device driving section 13c. That is to say, in the first and the second embodiment, a solid and liquid separator that does not have the sealing implement driving devices 12c and 41, and the backup plate 12b may be employed. In such a configuration, the sealing implement 12a is moved back and forth with respect to the front surface of the filtration section 11a by the pressurization device driving section 13c together with the main body section 13a and the venting plate 13b or the pressurizing plate. Accordingly, at the time the slurry S supplied to the front surface of the filtration section 11a is pressurized by the pressurization device 13, it is possible for this slurry S to be surrounded by the sealing implement 12a.

### [Industrial Applicability]

At the time of pressurization, it is possible to prevent the mixed body from being pushed out, or being dispersed, farther to the outside than the pressurizing region along the front surface of the filtration section. Moreover the disparity in the purity of the obtained solid substance can be restrained, and the purity of this solid substance can be improved.

## Claims

1. A solid and liquid separator that separates a liquid substance and a solid substance from a mixed body comprising:
a filtration section in which a front surface thereof is supplied with the mixed body;
a frame-shaped sealing implement having a frame-shaped pressing face that is pressed to the mixed body, and in which an entire perimeter of the pressing face is pressed and is able to make close contact with the front surface of the filtration section or the mixed body supplied to the front surface;
a sealing device that supports the sealing implement so as to move back and forth with respect to the front surface of the filtration section; and
a pressurization device that pressurizes the mixed body supplied to the front surface of the filtration section at an inside of the pressing face.

2. The solid and liquid separator according to Claim 1, wherein the sealing implement is formed by an elastically deformable material.

3. The solid and liquid separator according to Claim 2, wherein the elastically deformable material is one of rubber foam, a closed cell sponge, and urethane.

4. The solid and liquid separator according to Claim 2, wherein the sealing implement is a tube which is elastically expandable by being supplied with a first pressurized fluid to an interior thereof.

5. The solid and liquid separator according to Claim 1, wherein the sealing device supports the sealing implement so as to be mutually independently pressable with respect to the front surface of the filtration section, or the mixed body provided to the front surface at multiply divided regions in a circumferential direction of the sealing implement.

6. The solid and liquid separator according to Claim 1, wherein the pressurization device supplies a second pressurized fluid for pressurizing the mixed body to the inside of the pressing face of the sealing implement.

7. The solid and liquid separator according to Claim 6, wherein
the pressurization device is further provided with a pressurizing plate that is pierced with a plurality of pierced holes, and a surface in which these pierced holes are opened makes contact with, and pressurizes the mixed body; and
the mixed body is pressurized by the pressurizing plate and the second pressurized fluid, by passing the second pressurized fluid through the pierced holes while the pressurizing plate is in contact with the mixed body.

8. The solid and liquid separator according to Claim 1, further comprising a collection device that is connected to a vacuum suction device, collects the liquid substance, and is provided on a back face side of the filtration section.

9. The solid and liquid separator according to Claim 8, wherein
the front surface of the filtration section is formed by a filter cloth that travels substantially horizontally; and
the collection device includes a vacuum tray that is connected to the vacuum suction device, and a plurality of the collection devices are provided beneath the filter cloth in a traveling direction of the filter cloth.

10. A solid and liquid separating method comprising:
surrounding a mixed body containing a liquid substance and a solid substance, that is supplied to a front surface of a filtration section with a frame-shaped sealing implement to seal a pressurizing region; and
pressurizing the mixed body positioned within the pressurizing region, to separate the liquid substance and the solid substance.

11. A solid and liquid separating method comprising:
surrounding a mixed body containing a liquid substance and a solid substance, that is supplied to a front surface of a filtration section with a frame-shaped sealing implement to seal a pressurizing region; and
when pressurizing the mixed body positioned within the pressurizing region to separate the liquid substance from the solid substance, vacuum suctioning on the mixed body supplied to the front surface of the filtration section from a back face side of the filtration section.
